# FASCICULE DE BREVET EUROPEEN

(11) **EP 2 975 982 B1**
(45) Date de publication et mention de la délivrance du brevet: **12.04.2017**
(21) Numéro de dépôt: 14715351.4
(22) Date de dépôt: 10.03.2014
(51) Int. Cl.: A47J 31/56, A47J 31/057

(54) **DISPOSITIF DE COMMANDE D'UNE CAFETIÈRE A FILTRE SANS MAINTIEN AU CHAUD DE LA CARAFE**
VORRICHTUNG ZUR STEUERUNG EINES FILTERS EINER KAFFEEMASCHINE OHNE ERWÄRMUNG DER DEKANTERS
DEVICE FOR CONTROLLING A FILTER COFFEE MAKER WITHOUT WARMING OF THE DECANTER

(30) Priorité: 18.03.2013 FR 1352406
(43) Date de publication de la demande: 27.01.2016
(73) Titulaire: SEB S.A., 69130 Ecully (FR)
(72) Inventeur: DUMOUX, Philippe, 21120 Gemeaux (FR); BOUVIER, Stéphane, 21000 Dijon (FR)
(74) Mandataire: Bourrières, Patrice
(86) Numéro de dépôt international: PCT/FR2014/050537
(87) Numéro de publication internationale: WO 2014/147320

(56) Documents cités:
- US-A- 4 139 761
- US-A- 4 838 152

## Description

La présente invention concerne une cafetière à filtre ne comportant pas de maintien au chaud de la carafe ou du pot contenant le café, ladite carafe étant isolée thermiquement pour maintenir le café chaud. L'invention porte en particulier sur le dispositif de commande de la cafetière. Une telle cafetière a pour objet de réduire la consommation d'énergie électrique puisqu'elle permet de conserver le café chaud dans la carafe une fois le café infusé, sans nécessité que la platine sur laquelle repose ladite carafe soit équipée d'un système chauffant.

Une telle cafetière est connue de l'homme du métier. Elle est généralement équipée d'une chaudière comportant deux tubes agencés cote à cote. Le premier tube comprend une résistance chauffante et le deuxième tube permet d'admettre de l'eau issue d'un réservoir et de la chauffer à l'aide de la résistance chauffante pour que cette eau chaude portée à ébullition soit expulsée vers un récipient d'infusion contenant la mouture de café. La cafetière comporte un thermostat agencé au contact du deuxième tube de passage de l'eau. Le thermostat est configuré pour être armé ou enclenché manuellement pour permettre le chauffage de l'eau et pour se déclencher automatiquement lorsqu'il atteint une température critique correspondant à la fin du cycle de préparation du café, lorsque toute l'eau a été chauffée. Ainsi, la cafetière comporte uniquement une commande manuelle, du type bouton poussoir, configurée pour enclencher le thermostat lorsque l'on appuie dessus et pour revenir automatiquement en position dégagée. L'enclenchement du thermostat permet le passage du courant électrique pour l'alimentation de la résistance de chauffe de l'eau. Le thermostat est conçu pour rester enclenché pendant l'écoulement complet de l'eau contenue dans le réservoir de la cafetière. Lorsque toute l'eau contenue dans le réservoir a été chauffée, le deuxième tube est vide et sa température, au contact de la résistance chauffante s'accroit. Une fois la température critique du thermostat atteinte, celui-ci se déclenche, ce qui coupe l'alimentation électrique. Cette conception présente l'inconvénient de nécessiter le débranchement de la prise de la cafetière afin de pouvoir l'éteindre complètement. De plus, si l'utilisateur souhaite arrêter la cafetière au cours d'un cycle d'infusion du café, il faut également débrancher la prise. L'objet de la présente invention est de remédier aux inconvénients précités et de proposer une cafetière présentant une ergonomie optimisée pour permettre à l'utilisateur de l'utiliser facilement en toute sécurité.

Le document US 4 139 761 A1 décrit une cafetière avec thermostat.

Un autre objet de la présente invention est de proposer une cafetière qui soit de conception simple et économique à mettre en oeuvre.

A cet effet, l'invention concerne une cafetière électrique qui comprend notamment une résistance chauffante et un circuit électrique configuré pour permettre l'alimentation en électricité de la résistance chauffante depuis une source d'électricité, le circuit électrique comprenant au moins un thermostat réarmable configuré pour être enclenché manuellement et permettre le passage de l'électricité et pour se déclencher automatiquement à une température critique et interrompre le passage de l'électricité, caractérisée en ce que la cafetière comporte un interrupteur à commande manuelle configuré pour permettre le passage de l'électricité en position fermée et pour interrompre le passage de l'électricité en position ouverte, le thermostat et l'interrupteur étant montés en série avec la résistance chauffante sur le circuit électrique ; et en ce que la cafetière comprend un dispositif de commande manuelle configuré pour simultanément enclencher le thermostat et fermer l'interrupteur et, inversement, pour ouvrir prématurément l'interrupteur avant le déclenchement automatique du thermostat.

Ainsi, la mise en fonctionnement de la cafetière selon l'invention s'effectue simplement en actionnant un seul et unique dispositif de commande manuelle tout en permettant à ladite cafetière de se déclencher automatiquement en cas de température critique atteinte par le thermostat, et l'arrêt du cycle d'infusion, avant le déclenchement du thermostat, peut s'effectuer en actionnant l'interrupteur en position ouverte, sans nécessiter le débranchement de la prise de courant de la cafetière.

Avantageusement, le dispositif de commande manuelle comprend, d'une part, un premier dispositif poussoir configuré pour appuyer concomitamment sur un bouton d'enclenchement du thermostat et sur une première partie de l'interrupteur permettant son basculement en position fermée et, d'autre part, un second dispositif poussoir configuré pour appuyer sur une seconde partie de l'interrupteur permettant son basculement en position ouverte. Ainsi, le premier dispositif poussoir permet la mise en service de la cafetière en activant à la fois le thermostat et l'interrupteur et, le second dispositif poussoir permet l'interruption prématurée de la cafetière avant même que le thermostat n'atteigne une température critique.

De préférence, ledit premier dispositif poussoir comprend un premier bouton poussoir et des premiers moyens de rappel dudit bouton poussoir. Le premier bouton poussoir comporte une tige, la tige et la première partie de l'interrupteur étant configurées pour qu'une portion de ladite tige appuie sur ladite première partie lors de l'enfoncement dudit bouton poussoir pour permettre de basculer l'interrupteur en position ouverte. En outre, le premier dispositif est configuré pour qu'une seconde portion de la tige exerce directement ou indirectement un appui sur le bouton d'enclenchement lors de l'enfoncement dudit bouton poussoir. Cela permet d'enclencher le thermostat concomitamment au basculement de l'interrupteur en position ouverte.

Avantageusement, la première partie de l'interrupteur comprend un orifice au travers duquel passe la tige. En outre, la tige comprend au moins une ailette configurée pour prendre appui sur le contour de l'orifice lors de l'enfoncement du premier bouton poussoir.

Cette conception permet de limiter l'encombrement du dispositif de commande manuelle. Des variantes peuvent cependant être envisagées sans sortir du cadre de l'invention. On peut par exemple prévoir au moins une ailette sur la tige qui prend appui sur une butée disposée à l'extrémité de la première partie de l'interrupteur.

De préférence, la tige exerce un appui indirectement sur le bouton d'enclenchement du thermostat. A cet effet, le premier dispositif poussoir comprend une pièce intermédiaire agencée entre l'extrémité de la tige et le bouton d'enclenchement du thermostat et un ressort de rappel. La pièce intermédiaire est configurée pour appuyer sur le bouton d'enclenchement lorsque l'extrémité de la tige appuie contre ladite pièce intermédiaire et pour repousser en sens inverse la tige sous l'action du ressort de rappel. Ceci permet de dégager ladite extrémité et ladite pièce intermédiaire vis-à-vis du bouton d'enclenchement du thermostat en sorte de ne pas faire obstacle à son déclenchement lorsqu'il atteint la température critique. Le thermostat peut donc se déclencher sans aucune retenue après la mise en service de la cafetière. Cette conception avec un contact indirect présente pour avantage de disposer d'une plus grande liberté de positionnement des composants dans la cafetière et de garantir l'enclenchement convenable du thermostat. On pourrait toutefois envisager une variante de réalisation selon laquelle l'extrémité de la tige pendrait contact directement sur le bouton d'enclenchement du thermostat, ce qui nécessiterait cependant de disposer convenablement l'axe de la tige dans l'axe du bouton d'enclenchement pour garantir un fonctionnement convenable de la cafetière et imposerait en outre une implantation stricte des composants à l'intérieur de la cafetière.

De préférence, ledit premier dispositif poussoir comprend un bouton poussoir et des moyens de rappel du bouton poussoir. En outre, le bouton poussoir est configuré pour appuyer sur la première partie de l'interrupteur lors de son enfoncement, ce qui permet de basculer l'interrupteur en position fermée. Par ailleurs, la première partie est configurée pour appuyer concomitamment sur le bouton d'enclenchement du thermostat lors de l'enfoncement du bouton poussoir.

Ainsi on enclenche le thermostat concomitamment au basculement de l'interrupteur en position fermée. Les moyens de rappel ramènent le bouton poussoir en laissant la première partie de l'interrupteur en contact sur le bouton d'enclenchement du thermostat, ce qui impose au bouton d'enclenchement de basculer inversement l'interrupteur en position ouverte lors du déclenchement du thermostat à sa température critique. Le bouton d'enclenchement doit donc disposer d'une force de rappel suffisamment élevée pour permettre le basculement de l'interrupteur.

Avantageusement, le second dispositif poussoir comprend un second bouton poussoir configuré pour appuyer sur la seconde partie de l'interrupteur, lors de son enfoncement.

Ainsi, l'enfoncement du second bouton poussoir permet d'appuyer directement sur la seconde partie de l'interrupteur pour le basculer en position ouverte selon laquelle l'alimentation électrique de la résistance chauffante est interrompue. De préférence, le second bouton poussoir reste enfoncé et en appui sur la seconde partie de l'interrupteur tant que le premier bouton poussoir n'est pas actionné. Lorsque le premier bouton poussoir est enfoncé, cela fait basculer l'interrupteur en position fermée, comme expliqué précédemment, ce qui permet concomitamment à la seconde partie de l'interrupteur d'exercer un effort inverse sur le second bouton poussoir pour le dégager et permettre à celui-ci d'être à nouveau activé.

Avantageusement, le second dispositif poussoir comprend des seconds moyens de rappel du second bouton poussoir.

Cela permet le rappel instantané du second bouton poussoir hors de contact de la seconde portion de l'interrupteur. Cela permet de réduire l'effort à exercer lors du basculement en position fermée de l'interrupteur, sous l'action du premier dispositif poussoir.

De préférence, le premier dispositif poussoir comprend un voyant lumineux configuré pour indiquer la mise sous tension de l'appareil.

Cela permet de détecter l'état de fonctionnement de la cafetière et d'anticiper la coupure complète de celle-ci une fois le café écoulé et contenu dans le pot isotherme.

Avantageusement, la cafetière comporte un pot isotherme.

La description suivante met en évidence les caractéristiques techniques et avantages de la cafetière selon l'invention. Cette description s'appuie sur des figures, parmi lesquelles :
- La figure 1 montre une vue tridimensionnelle de la cafetière objet de l'invention ;
- La figure 2 montre une vue tridimensionnelle du côté avant d'un mode préférentiel de réalisation du dispositif de commande manuelle sur la cafetière illustrée en figure 1 ;
- La figure 3 montre une vue tridimensionnelle du côté arrière du dispositif de commande manuelle illustré en figure 2 ;
- La figure 4 montre une vue tridimensionnelle du côté avant du dispositif de commande manuelle tel qu'illustré en figure 2, sur laquelle la partie du corps de la cafetière a été retirée afin de mettre en évidence les composants dudit dispositif de commande manuelle ;
- La figure 5 montre une vue tridimensionnelle du thermostat et de l'interrupteur ;
- La figure 6 montre un schéma du circuit électrique de la cafetière.

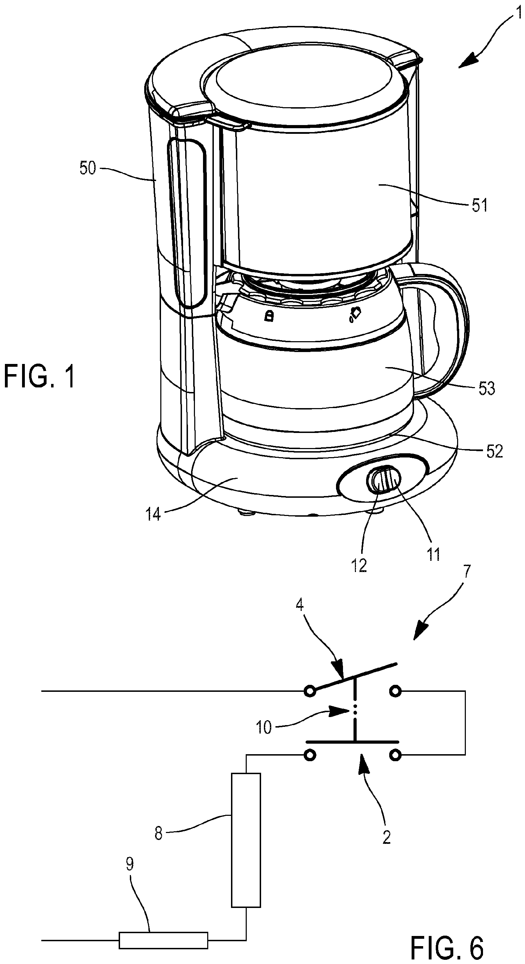

Comme illustrée sur la figure 1, la cafetière 1 électrique comprend, de manière connue, un corps 14 comportant un réservoir 50 à eau, un récipient d'infusion 51 permettant le mélange de l'eau chauffée avec la mouture de café et la filtration du mélange et un plateau 52 de support d'un pot isotherme 53 permettant la réception du café issu du mélange, après filtration.

La cafetière 1 comporte une chaudière comportant un premier et un deuxième tube agencés cote à cote. Le premier tube comprend une résistance chauffante et le deuxième tube fait partie d'un conduit de circulation d'eau. L'eau circule du réservoir dans le deuxième tube et est chauffée jusqu'à ébullition par la résistance thermique avant d'être éjectée par l'ébullition dans le récipient d'infusion 51. La chaudière n'est pas illustrée sur les figures, mais est bien connue de l'homme du métier des cafetières.

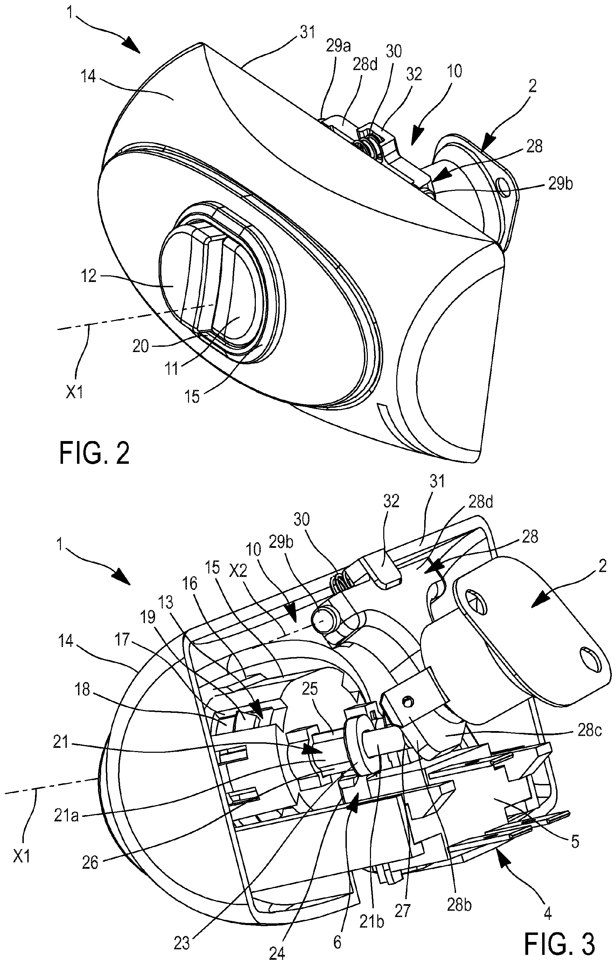

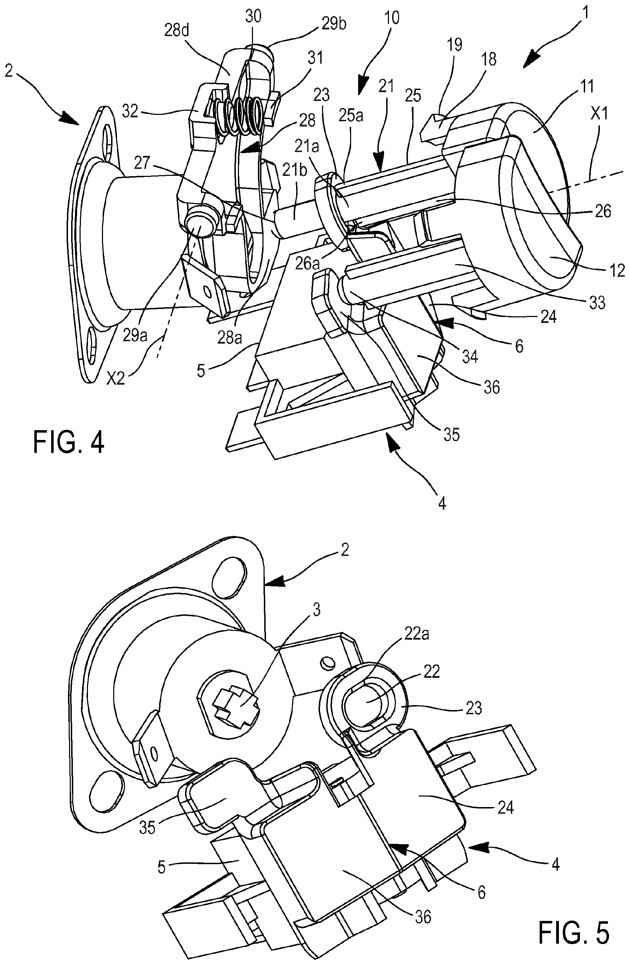

Comme illustrée sur les figures 2 à 5, la cafetière 1 comprend également un thermostat 2 agencé sur le tube à eau de la chaudière et qui comporte un bouton d'enclenchement 3. Un tel thermostat 2 est bien connu de l'homme du métier et permet, lors de l'enclenchement dudit bouton d'enclenchement 3 en appuyant sur celui-ci de laisser passer le courant électrique. Lorsque ce thermostat 2 atteint une température critique, par exemple de 115°C correspondant à la température du tube à eau atteinte en absence d'eau, celui-ci déclenche ledit bouton d'enclenchement 3, ce qui coupe le passage du courant électrique. L'absence d'eau correspond à la fin d'un cycle de préparation du café ou à un oubli de l'utilisateur qui n'a pas rempli le réservoir.

De même, comme illustré sur les figures 2 à 5, la cafetière 1 comprend un interrupteur 4 du type ouvert/fermé qui permet lors de sa fermeture, le passage du courant électrique et, lors de son ouverture, la coupure du passage du courant électrique. L'interrupteur 4 comporte un mécanisme 5 et un bouton 6 d'actionnement du mécanisme 5, ledit bouton 6 permettant de basculer le mécanisme 5 de l'interrupteur 4 en position ouverte ou en position fermée. Un tel interrupteur 4 est également bien connu de l'homme du métier.

Comme schématisé sur la figure 6, la cafetière 1 comprend un circuit électrique 7 qui intègre le thermostat 2 et l'interrupteur 4, lesquels sont montés en série avec une résistance thermique 8 permettant de chauffer l'eau. Ce circuit électrique 7 comprend également un fusible 9 qui se déclenche en cas de surchauffe. Ce circuit électrique 7 est raccordé à une source d'énergie électrique, notamment le réseau d'électricité public, par le biais d'une prise de raccordement (non illustrée). Les câbles de raccordement entre les composants du circuit électrique 7 ne sont pas illustrés sur les figures 2 à 5. L'homme du métier est cependant en mesure d'effectuer un tel raccordement entre lesdits composants.

Comme illustré sur les figures 2 à 6, la cafetière comprend un dispositif de commande manuelle 10 qui est configuré pour simultanément enclencher le thermostat 2 et basculer l'interrupteur 4 en position fermée et, inversement, pour basculer prématurément l'interrupteur 4 en position ouverte avant même que le thermostat 2 atteigne sa température critique et ne se déclenche automatiquement.

Un premier bouton poussoir appelé par la suite bouton marche 11 et un deuxième bouton poussoir appelé par la suite bouton arrêt 12 sont montés chacun en liaison glissière 13 sur le corps 14 de la cafetière 1, selon une direction parallèle à un axe de translation X1, comme le montrent les figures 1 à 3. Pour cela, une pièce de réception 15 est encliquetée sur le corps 14 par le biais de pattes d'encliquetage 16. Cette pièce de réception 15 comprend des lumières 17 agencées dans le sens de l'axe de translation X1. Les boutons marche 11 et arrêt 12 comprennent chacun des branches 18 munies chacune d'un ergot 19 qui s'encliquète dans une lumière 17 lorsque ces boutons marche 11 et arrêt 12 sont insérés dans la pièce de réception 15 qui comprend un logement 20 configuré à cet effet. Ainsi les boutons marche 11 et arrêt 12 peuvent coulisser dans un sens ou dans l'autre sur la pièce de réception 15, selon une direction définie par l'axe de translation X1.

Comme illustré sur les figures 2 à 5, le bouton marche 11 comprend une tige 21 agencée selon un axe parallèle à l'axe X1. Cette tige 21 passe au travers d'un orifice 22 de forme oblongue agencé sur une patte 23 assujettie à la première partie 24 du bouton 6 de l'interrupteur 4, cette patte 23 étant dégagée par rapport au mécanisme 5 de l'interrupteur 4 pour ne pas gêner le coulissement de la tige 21 lors de l'actionnement dudit bouton marche 11. La tige 21 comprend sur sa portion proximale 21a deux ailettes 25, 26 qui s'étendent transversalement par rapport à la forme oblongue de l'orifice 22, comme illustré en figure 3. Leur largeur est supérieure à la largeur de l'orifice 22, ce qui permet aux extrémités 25a, 26a de ces ailettes 25, 26 de prendre appui contre la patte 23, sur le contour 22a de l'orifice 22, comme illustré en figure 3, lorsque le bouton marche 11 est enfoncé, ce qui bascule le bouton 6 et ferme l'interrupteur 4. La portion distale 21 b de la tige 21 passe au travers de l'orifice 22. La portion distale 21 b comporte une extrémité 27 qui est en appui contre une face avant 28a d'une partie inférieure 28b d'une pièce intermédiaire 28. La forme oblongue de l'orifice 22 évite que la portion distale 21b ne bloque contre le contour 22a dudit orifice 22 durant le basculement de la patte 23. Cette pièce intermédiaire 28 comprend sur ses côtés latéraux deux ergots 29a, 29b circulaires qui sont disposés selon un axe X2. Ces ergots 29a, 29b permettent de monter la pièce intermédiaire 28 en liaison pivot d'axe X2 sur le corps 14 de la cafetière 1. Lorsque le bouton marche 11 est enfoncé, la tige 21 appuie contre la face avant 28a de la pièce intermédiaire 28 qui voit donc sa partie inférieure 28b basculer vers l'arrière du fait de son pivotement selon l'axe X2, ce qui permet à une face arrière 28c de cette pièce intermédiaire 28 de venir en contact contre le bouton d'enclenchement 3 et d'enclencher le thermostat 2. On comprend que l'enclenchement du thermostat 2 s'effectue concomitamment au basculement de l'interrupteur 4 en position fermée lorsque le bouton marche 11 est enfoncé.

Comme illustré sur les figures 2 et 3, un ressort 30 est agencé entre un rebord 31 sur le corps 14 et une patte 32 qui prolonge vers le haut une partie supérieure 28d de la pièce intermédiaire 28. Lors du basculement vers l'arrière de la partie inférieure 28b de la pièce intermédiaire 28, la patte 32 bascule au contraire vers l'avant, ce qui comprime le ressort 30. Lorsque l'utilisateur cesse d'enfoncer le bouton marche 11, le ressort se détend et revient en position d'équilibre, ce qui permet le basculement vers l'avant de la partie inférieure 28b de la pièce intermédiaire 28. Cela ramène le bouton marche 11 en position déclenchée, prêt à être enfoncé à nouveau, et permet de dégager la face arrière 28c de la pièce intermédiaire 28 vis-à-vis du bouton d'enclenchement 3 du thermostat 2 qui est alors en mesure de se déclencher librement lorsque celui-ci atteint sa température critique.

Comme illustré sur les figures 2 à 5, le bouton arrêt 12 comprend une tige 33 qui s'étend selon un axe parallèle à l'axe X1 et qui comporte une extrémité 34 en appui contre une patte 35 assujettie à la seconde partie 36 du bouton 6 de l'interrupteur 4. Lorsque le bouton arrêt 12 est enfoncé, sa tige 33 appuie contre la patte 35 ce qui permet le basculement du bouton 6 qui ouvre le mécanisme 5 de l'interrupteur 4 et arrête la cafetière 1. L'enfoncement du bouton marche 11 permet le basculement du bouton 6 en sens inverse et ferme le mécanisme 5 de l'interrupteur 4, comme expliqué précédemment, et permet en outre à la patte 35 d'appuyer en sens inverse contre l'extrémité 34 de la tige 33, ramenant ainsi le bouton arrêt 12 en position déclenchée, ce qui autorise son enfoncement pour éteindre à nouveau la cafetière 1. On pourrait toutefois prévoir un ressort de rappel agencé entre le bouton arrêt 12 et la pièce de réception 15, à l'intérieur du logement 20, pour assurer le retour automatique du bouton arrêt 12 en position déclenchée.

D'autres caractéristiques sont envisageables dans le cadre de l'invention. On peut notamment ajouter un voyant lumineux tel qu'une diode électroluminescente qui s'allume lors de la mise en marche de la cafetière. Ce voyant lumineux est de préférence positionné à l'intérieur du bouton marche 11 dans le logement 20 de la pièce de réception 15.

On pourrait en outre prévoir des variantes de fabrication sans sortir du cadre de l'invention. Il est notamment possible de supprimer l'orifice 22 sur la patte 23, sur la première partie 24 du bouton 6 de l'interrupteur 4, et d'ajouter des butées sur le côté latéral de ladite patte 23, sur lesquelles viendraient en appui les extrémités 25a, 26a des ailettes 25, 26 lors de l'enfoncement du bouton marche 11.

De même, on pourrait envisager la suppression de la pièce intermédiaire 28 et prévoir une patte 23 sur la première partie 24 du bouton 6 de l'interrupteur 4, identique à la patte 35 sur la seconde partie 36 dudit bouton 6, décrite précédemment. Et prévoir un bouton marche 11 identique au bouton arrêt 12 décrit précédemment. Dans ce cas, ladite patte 23 sur la première partie 24 serait configurée pour venir directement en contact du bouton d'enclenchement 3 du thermostat 2 lors de l'enfoncement du bouton marche 11, ce qui permettrait d'enclencher concomitamment le thermostat 2 et l'interrupteur 4. Dans ce cas, un ressort de rappel serait agencé à l'intérieur du logement 20 de la pièce de réception 15 pour ramener le bouton marche 11 en position dégagée vis-à-vis de la patte 23 sur la première partie 24 du bouton 6 de l'interrupteur 4. Lorsque le thermostat 2 atteint sa température critique et se déclenche, son bouton d'enclenchement 3 exerce un effort contre la face arrière de la patte 23 pour ramener concomitamment l'interrupteur 4 en position ouverte.

## Revendications

1. Cafetière électrique (1) qui comprend notamment une résistance chauffante (8) et un circuit électrique (7) configuré pour permettre l'alimentation en électricité de la résistance chauffante depuis une source d'électricité, le circuit électrique comprenant au moins un thermostat (2) réarmable configuré pour être enclenché manuellement et permettre le passage de l'électricité et, pour se déclencher automatiquement à une température critique et interrompre le passage de l'électricité, **caractérisée en ce que** la cafetière (1) comporte un interrupteur (4) à commande manuelle configuré pour permettre le passage de l'électricité en position fermée et pour interrompre le passage de l'électricité en position ouverte, le thermostat et l'interrupteur étant montés en série avec la résistance chauffante sur le circuit électrique et **en ce que** la cafetière (1) comprend un dispositif de commande manuelle (10) configuré pour simultanément enclencher le thermostat et fermer l'interrupteur et, inversement, pour ouvrir prématurément l'interrupteur avant le déclenchement automatique du thermostat.

2. Cafetière électrique (1) selon la revendication 1, **caractérisée en ce que** le dispositif de commande manuelle (10) comprend, d'une part, un premier dispositif poussoir (11, 21, 22, 23) configuré pour appuyer concomitamment sur un bouton d'enclenchement (3) du thermostat (2) et sur une première partie (24) de l'interrupteur permettant son basculement en position fermée et, d'autre part, un second dispositif poussoir (12, 33, 35) configuré pour appuyer sur une seconde partie (36) de l'interrupteur (4) permettant son basculement en position ouverte.

3. Cafetière électrique (1) selon la revendication 2, **caractérisée en ce que** le premier dispositif poussoir comprend un premier bouton poussoir (11) et des premiers moyens de rappel (30, 31, 32) dudit bouton poussoir, le premier bouton poussoir comportant une tige (21), la tige et la première partie (24) de l'interrupteur (4) étant configurées pour qu'une portion (21 a) de ladite tige appuie sur ladite première partie (24) lors de l'enfoncement dudit bouton poussoir pour permettre de basculer l'interrupteur (4) en position ouverte, le premier dispositif poussoir étant configuré pour qu'une seconde portion (21 b) de la tige exerce directement ou indirectement un appui sur le bouton d'enclenchement (3) du thermostat (2) lors de l'enfoncement dudit premier bouton poussoir.

4. Cafetière électrique (1) selon la revendication 3, **caractérisée en ce que** la première partie (24) de l'interrupteur (4) comprend un orifice (22) au travers duquel passe la tige (21), ladite tige comprenant au moins une ailette (25, 26) configurée pour prendre appui sur le contour (22a) de l'orifice lors de l'enfoncement du premier bouton poussoir (11).

5. Cafetière électrique (1) selon l'une des revendications 3 ou 4, **caractérisée en ce que** le premier dispositif poussoir comprend une pièce intermédiaire (28) agencée entre l'extrémité (27) de la tige (21) et le bouton d'enclenchement (3) du thermostat (2) et, un ressort de rappel (30), la pièce intermédiaire étant configurée pour appuyer sur ledit bouton d'enclenchement (3) lorsque ladite extrémité (27) appuie contre ladite pièce intermédiaire et, pour repousser en sens inverse la tige (21) sous l'action du ressort de rappel (30).

6. Cafetière électrique (1) selon la revendication 2, **caractérisée en ce que** le premier dispositif poussoir comprend un premier bouton poussoir (11) et des moyens de rappel dudit bouton poussoir, le bouton poussoir étant configuré pour appuyer sur la première partie (24) de l'interrupteur (4) lors de son enfoncement, ladite première partie étant configurée pour appuyer concomitamment sur le bouton d'enclenchement (3) du thermostat (2) lors de l'enfoncement du premier bouton poussoir (11).

7. Cafetière électrique (1) selon l'une des revendications 2 à 6, **caractérisée en ce que** le second dispositif poussoir comprend un second bouton poussoir (12) configuré pour appuyer sur la seconde partie (36) de l'interrupteur (4) lors de son enfoncement.

8. Cafetière électrique (1) selon la revendication 7, **caractérisée en ce que** le second dispositif poussoir comprend des seconds moyens de rappel du second bouton poussoir (12).

9. Cafetière électrique (1) selon l'une des revendications 1 à 8, **caractérisée en ce que** le premier dispositif poussoir comprend un voyant lumineux configuré pour indiquer la mise sous tension de l'appareil.

10. Cafetière électrique (1) selon l'une des revendications 1 à 9, **caractérisée en ce qu'**elle comporte un pot isotherme (53).

## Patentansprüche

1. Elektrische Kaffeemaschine (1), die insbesondere einen Heizwiderstand (8) und einen Stromkreis (7) umfasst, der dafür ausgelegt ist, den Heizwiderstand von einer Stromquelle aus mit Strom zu versorgen, wobei der Stromkreis mindestens ein rücksetzbares Thermostat (2) umfasst, das dafür ausgelegt ist, manuell eingeschaltet werden zu können und den Stromdurchfluss zu erlauben sowie automatisch bei einer kritischen Temperatur auszulösen und den Stromdurchfluss zu unterbrechen, **dadurch gekennzeichnet, dass** die Kaffeemaschine (1) einen handbetätigten Schalter (4) umfasst, der dafür ausgelegt ist, den Stromdurchfluss in geschlossener Stellung zu erlauben und den Stromdurchfluss in geöffneter Stellung zu unterbrechen, wobei das Thermostat und der Schalter mit dem Heizwiderstand im Stromkreis in Reihe geschaltet sind, und dass die Kaffeemaschine (1) eine manuelle Steuervorrichtung (10) umfasst, die dafür ausgelegt ist, gleichzeitig das Thermostat einzuschalten und den Schalter zu schließen und, umgekehrt, den Schalter vor dem automatischen Auslösen des Thermostats vorzeitig zu öffnen.

2. Kaffeemaschine (1) nach Anspruch 1, **dadurch gekennzeichnet, dass** die manuelle Steuervorrichtung (10) einerseits eine erste Druckvorrichtung (11, 21, 22, 23) umfasst, die dafür ausgelegt ist, gleichzeitig auf einen Einschalttaster (3) des Thermostats (2) und auf einen ersten Teil (24) des Schalters zu drücken, wodurch dieser in die geschlossene Stellung gekippt wird, und andererseits eine zweite Druckvorrichtung (12, 33, 35), die dafür ausgelegt ist, auf einen zweiten Teil (36) des Schalters (4) zu drücken, durch den dieser in die geöffnete Stellung gekippt wird.

3. Kaffeemaschine (1) nach Anspruch 2, **dadurch gekennzeichnet, dass** die erste Druckvorrichtung einen ersten Drucktaster (11) und erste Rückstellmittel (30, 31, 32) des Drucktasters umfasst, wobei der erste Drucktaster einen Stift (21) aufweist, wobei der Stift und der erste Teil (24) des Schalters (4) dafür ausgelegt sind, dass ein Teil (21 a) des Stifts beim Niederdrücken des Drucktasters auf den ersten Teil (24) drückt, um den Schalter (4) in die geöffnete Stellung zu kippen, wobei die erste Druckvorrichtung dafür ausgelegt ist, dass ein zweiter Teil (21 b) des Stifts beim Niederdrücken des ersten Drucktasters direkt oder indirekt einen Druck auf den Einschalttaster (3) des Thermostats (2) ausübt.

4. Kaffeemaschine (1) nach Anspruch 3, **dadurch gekennzeichnet, dass** der erste Teil (24) des Schalters (4) eine Öffnung (22) umfasst, durch die der Stift (21) verläuft, wobei der Stift mindestens eine Rippe (25, 26) umfasst, die dafür ausgelegt ist, beim Niederdrücken des ersten Drucktasters (11) auf der Kontur (22a) der Öffnung zur Auflage zu kommen.

5. Kaffeemaschine (1) nach einem der Ansprüche 3 oder 4, **dadurch gekennzeichnet, dass** die erste Druckvorrichtung ein Zwischenstück (28), das zwischen dem Ende (27) des Stifts (21) und dem Einschalttaster (3) des Thermostats (2) angeordnet ist, und eine Rückstellfeder (30) umfasst, wobei das Zwischenstück dafür ausgelegt ist, auf den Einschalttaster (3) zu drücken, wenn das Ende (27) gegen das Zwischenstück drückt, und den Stift (21) unter der Wirkung der Rückstellfeder (30) in entgegengesetzter Richtung zurückzudrücken.

6. Kaffeemaschine (1) nach Anspruch 2, **dadurch gekennzeichnet, dass** die erste Druckvorrichtung einen ersten Drucktaster (11) und Rückstellmittel des Drucktasters umfasst, wobei der Drucktaster dafür ausgelegt ist, bei dessen Niederdrücken auf den ersten Teil (24) des Schalters (4) zu drücken, wobei der erste Teil dafür ausgelegt ist, beim Niederdrücken des ersten Drucktasters (11) gleichzeitig auf den Einschalttaster (3) des Thermostats (2) zu drücken.

7. Kaffeemaschine (1) nach einem der Ansprüche 2 bis 6, **dadurch gekennzeichnet, dass** die zweite Druckvorrichtung einen zweiten Drucktaster (12) umfasst, der dafür ausgelegt ist, bei dessen Niederdrücken auf den zweiten Teil (36) des Schalters (4) zu drücken.

8. Kaffeemaschine (1) nach Anspruch 7, **dadurch gekennzeichnet, dass** die zweite Druckvorrichtung zweite Rückstellmittel des zweiten Drucktasters (12) umfasst.

9. Kaffeemaschine (1) nach einem der Ansprüche 1 bis 8, **dadurch gekennzeichnet, dass** die erste Druckvorrichtung eine Kontrollleuchte umfasst, die dafür ausgelegt ist, das Einschalten des Geräts anzuzeigen.

10. Kaffeemaschine (1) nach einem der Ansprüche 1 bis 9, **dadurch gekennzeichnet, dass** sie eine Thermoskanne (53) umfasst.

## Claims

1. Electric coffee maker (1) which comprises in particular a heating element (8) and an electrical circuit (7) configured to supply the heating element with electricity from a power source, the electrical circuit comprising at least one resettable thermostat (2) configured to be engaged manually and to allow the flow of electricity and to trip automatically at a critical temperature and interrupt the flow of electricity, **characterised in that** the coffee maker (1) comprises a manual switch (4) configured to allow the flow of electricity in the closed position and to interrupt the flow of electricity in the open position, the thermostat and the switch being mounted in series with the heating element on the electrical circuit and **in that** the coffee maker (1) comprises a manual control device (10) configured to simultaneously engage the thermostat and close the switch and, vice versa, to open the switch prematurely before automatic tripping of the thermostat.

2. Electric coffee maker (1) according to claim 1, **characterised in that** the manual control device (10) comprises, firstly, a first pushing device (11, 21, 22, 23) configured to press simultaneously on an engagement button (3) of the thermostat (2) and on a first part (24) of the switch to set it to the closed position and, secondly, a second pushing device (12, 33, 35) configured to press on a second part (36) of the switch (4) to set it to the open position.

3. Electric coffee maker (1) according to claim 2, **characterised in that** the first pushing device comprises a first push-button (11) and first return means (30, 31, 32) for said push-button, the first push-button comprising a rod (21), the rod and the first part (24) of the switch (4) being configured so that a portion (21 a) of said rod presses on said first part (24) when said push-button is pushed to set the switch (4) to the open position, the first pushing device being configured so that a second portion (21 b) of the rod presses directly or indirectly on the engagement button (3) of the thermostat (2) when said first push-button is pushed.

4. Electric coffee maker (1) according to claim 3, **characterised in that** the first part (24) of the switch (4) comprises a hole (22) through which the rod (21) passes, said rod comprising at least one fin (25, 26) configured to rest on the contour (22a) of the hole when the first push-button (11) is pushed.

5. Electric coffee maker (1) according to claim 3 or 4, **characterised in that** the first pushing device comprises an intermediate part (28) arranged between the end (27) of the rod (21) and the engagement button (3) of the thermostat (2), and a return spring (30), the intermediate part being configured to press
on said engagement button (3) when said end (27) presses against said intermediate part and to push the rod (21) in the opposite direction under the action of the return spring (30).

6. Electric coffee maker (1) according to claim 2, **characterised in that** the first pushing device comprises a first push-button (11) and return means for said push-button, the push-button being configured to press on the first part (24) of the switch (4) when it is pushed, said first part being configured to press simultaneously on the engagement button (3) of the thermostat (2) when the first push-button (11) is pushed.

7. Electric coffee maker (1) according to one of claims 2 to 6, **characterised in that** the second pushing device comprises a second push-button (12) configured to press on the second part (36) of the switch (4) when it is pushed.

8. Electric coffee maker (1) according to claim 7, **characterised in that** the second pushing device comprises second return means for the second push-button (12).

9. Electric coffee maker (1) according to one of claims 1 to 8, **characterised in that** the first pushing device comprises a light indicator configured to indicate when the appliance is switched on.

10. Electric coffee maker (1) according to one of claims 1 to 9, **characterised in that** it comprises an isothermal container (53).
